# EUROPÄISCHE PATENTSCHRIFT

(11) **EP 1 916 448 B1**
(45) Veröffentlichungstag und Bekanntmachung des Hinweises auf die Patenterteilung: **24.11.2010**
(21) Anmeldenummer: 07118264.6
(22) Anmeldetag: 11.10.2007
(51) Int. Cl.: F16H 3/12, B60K 17/28

(54) **Getriebebremseinrichtung für ein mehrstufiges Schaltgetriebe**
Gear brake device for a multi-stage manual transmission
Dispositif de freinage d'engrenage pour une boîte de vitesse

(30) Priorität: 24.10.2006 DE 102006050009
(43) Veröffentlichungstag der Anmeldung: 30.04.2008
(73) Patentinhaber: ZF Friedrichshafen AG, 88038 Friedrichshafen (DE)
(72) Erfinder: Steinborn, Mario, 88046 Friedrichshafen (DE); Cordt, Ramon, 88046 Friedrichshafen (DE)

(56) Entgegenhaltungen:
- DE-A1- 3 017 506
- DE-A1- 19 708 929
- DE-A1-102004 045 828
- DE-B1- 2 360 804
- GB-A- 1 550 259
- JP-A- 2005 313 739
- US-A1- 2005 241 423
- US-A1- 2006 116 238

## Beschreibung

Die Erfindung betrifft eine Getriebebremseneinrichtung für ein mehrstufiges Schaltgetriebe gemäß dem Oberbegriff des Patentanspruchs 1.

Eine solche Einrichtung ist aus der DE-A-197 08 929 bekannt.

Moderne Schaltgetriebe sind im Allgemeinen so aufgebaut, dass mehrere auf einer Getriebewelle fest angeordnete Zahnräder mit jeweils zugeordneten, auf einer zweiten Getriebewelle frei drehbar angeordneten Zahnrädern in ständigem Eingriff sind. Zum Einlegen eines Ganges wird eines der Losräder mit der zugeordneten Getriebewelle drehgekoppelt, so dass das Antriebsdrehmoment von der ersten Getriebewelle auf die zweite Getriebewelle und von dort letztlich auf eine Getriebeabtriebswelle übertragen wird.

Um das Getriebe stoßfrei, geräusch- und verschleißarm zu schalten, ist bei Einlegen eines Ganges sicherzustellen, dass das zu koppelnde Losrad und die zugeordnete Getriebewelle eine zumindest annähernd gleiche Drehzahl haben. Für eine derartige Drehzahlsynchronisation können klein dimensionierte Reibkupplungen innerhalb des Getriebes verwendet werden, die vor dem Ineingriffkommen von formschlüssigen Koppelvorrichtungen in Reibeingriff gelangen und die beiden gegebenenfalls unterschiedlichen Drehzahlen aneinander angleichen.

Bei einem anderen Synchronisationsverfahren wird die antriebsseitige Getriebewelle, die entweder die Festräder oder die Losräder trägt, entweder durch Beschleunigen mittels des Antriebsmotors oder durch Abbremsen mittels einer Getriebebremse auf eine Drehzahl gebracht, bei der die Drehzahlen des jeweils zu koppelnden Losrades und der zugeordneten Getriebewelle im Wesentlichen gleich sind sowie die zugeordneten Elemente der formschlüssigen Koppelvorrichtung in Eingriff gebracht werden können, so dass auf diese Weise eine Synchronisation ohne Reibkupplungen möglich ist.

Definitionsgemäß sind vorliegend die mit dem Antriebsmotor über die Antriebskupplung bzw. Fahrkupplung bei einem Fahrzeug antriebsverbindbaren Getriebewellen unter dem Begriff "antriebsseitige Getriebewellenanordnung" zusammengefasst, während die mit den Antriebsrädern ständig verbundenen Wellen als "abtriebsseitige Wellen" bezeichnet werden.

Wie allgemein bekannt ist, muss zum Zurückschalten in einen kleineren Gang die antriebsseitige Getriebewellenanordnung auf eine höhere Drehzahl gebracht werden. Das erfolgt in der Weise, dass nach dem Auslegen des vorherigen Ganges die Anfahrkupplung geschlossen und die Motordrehzahl über eine Motorsteuerung erhöht wird, bis die zum Einlegen der formschlüssigen Kupplung erforderliche Drehzahl erreicht ist. Zum Hochschalten muss die Drehzahl der antriebsseitigen Getriebewellenanordnung verringert werden. Das erfolgt in der Weise, dass nach dem Auslegen des vorherigen Ganges die antriebsseitige Getriebewellenanordnung bei geöffneter Fahrkupplung mittels einer auf eine der Getriebewellen wirkende Getriebebremse abgebremst wird, bis die zum Kuppeln erforderliche Drehzahl erreicht ist.

Eine Synchronisation mittels des Antriebsmotors bzw. mittels einer Getriebebremse ist vor allem in einfacher Weise bei automatisierten Schaltgetrieben einsetzbar, die bereits über eine Motorsteuerung und eine Getriebesteuerung verfügen. Das Funktionsprinzip kann jedoch auch bei manuell zu schaltenden Getrieben angewendet werden.

Übliche Schaltgetriebe für Fahrzeuge umfassen beispielsweise eine über eine Fahrkupplung mit dem Antriebsmotor kuppelbare Eingangswelle, eine über eine feste Zahnradverbindung mit dieser antriebsverbundene Vorgelegewelle, die mehrere Festräder trägt, und eine mit den Fahrzeugantriebsrädern ständig antriebsgekoppelte Abtriebswelle, auf der die den Festrädern zugeordneten Losräder angeordnet sind, die jeweils einzeln mit der Abtriebswelle in der oben beschriebenen Weise drehfest verbindbar sind. Daneben sind auch Schaltgetriebe mit zwei Vorgelegewellen bekannt, welches eine besonders kurze Getriebebauart erlaubt. Gemäß der oben stehenden Definition bilden die Eingangswelle und die Vorgelegewelle bzw. die Vorgelegewellen die antriebsseitige Getriebewellenanordnung, mit der die Getriebebremse zusammenwirkt. Anhand derartiger Schaltgetriebe wird die vorliegende Erfindung beispielhaft beschrieben, wobei jedoch darauf hingewiesen wird, dass die Erfindung auch bei anderen Getriebebauarten sinngemäß anwendbar ist.

In der DE 10 2004 045 828 A1 ist bereits ein Schaltgetriebe beschrieben, bei welchem die Getriebebremse als interne Bremse ausgeführt ist, die innerhalb eines Getriebegehäuses angeordnet ist und auf eine Vorgelegewelle wirkt. In der gleichen Druckschrift ist auch bereits erwähnt, dass die Getriebebremse "unmittelbar an das Getriebe angrenzend angeordnet", also als externe Bremse ausgeführt sein kann. Es ist auch bereits vorgeschlagen worden, eine externe Getriebebremse auf eine aus dem Getriebegehäuse herausgeführte, mit einer Vorgelegewelle antriebsverbundene PTO-Welle (PTO = Power Take Off = Zapfwelle) wirken zu lassen, die an sich für den Antrieb eines Nebenaggregates oder eines angehängten Gerätes, beispielsweise der Hydraulikpumpe zur Versorgung von hydraulischen Arbeitsgeräten vorgesehen ist. Bei einer derartigen Anordnung steht jedoch dann der PTO-Ausgang für die eigentliche PTO-Funktion nicht mehr zur Verfügung.

Vor diesem Hintergrund liegt der Erfindung die Aufgabe zugrunde, eine Getriebebremseneinrichtung der im Oberbegriff des Anspruchs 1 genannten Art zu schaffen, bei welcher trotz einer der Zapfwelle zugeordneten Getriebebremse eine PTO-Funktion der Zapfwelle zum Antrieb getriebeexterner Vorrichtungen möglich ist.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass sich eine Zapfwelle mit Hilfe getrieblicher Mittel in einen mit einer Getriebebremse zusammenwirkenden sowie weitere, als PTO-Anschlüsse dienende Zweige verzweigen lassen müsste, so dass eine Synchronisationsfunktion und eine PTO-Funktion über die gleiche Zapfwelle möglich ist.

Demnach geht die Erfindung aus von einer Getriebebremseneinrichtung für ein mehrstufiges Schaltgetriebe, umfassend eine außerhalb eines Getriebegehäuses angeordnete, auf eine aus dem Getriebegehäuse herausgeführte, mit einer antriebsseitigen Getriebewellenanordnung antriebsverbundene bzw. antriebsverbindbare Zapfwelle wirkende Getriebebremse. Zur Lösung der gestellten Aufgabe ist dabei vorgesehen, dass der Getriebebremse wenigstens ein mit der Zapfwelle antriebsverbundener PTO-Anschluss nachgeordnet ist.

Erfindungsgemäß verzweigt sich die Zapfwelle in wenigstens zwei Einzelwellen, wobei eine dieser Einzelwellen mit der Getriebebremse zusammenwirkt und die anderen Einzelwellen jeweils mit einem PTO-Anschluss ausgestattet sind.

Erfindungsgemäß treibt die Zapfwelle über ein Zahnradgetriebe eine Nebenwelle an, wobei die Zapfwelle und die Nebenwelle jeweils eine der Einzelwellen bilden.

Gemäß einer Ausgestaltungsvariante weist die Zapfwelle an ihrem getriebefernen Ende einen PTO-Anschluss auf, während die Nebenwelle mit der Getriebebremse zusammenwirkt.

Eine andere Ausgestaltungsvariante sieht vor, dass die Zapfwelle mit der Getriebebremse zusammenwirkt, und dass die Nebenwelle an einem Ende einen PTO-Anschluss aufweist.

Das Zahnradgetriebe eröffnet die Möglichkeit einer Über- bzw. Untersetzung derart, dass die Nebenwelle mit einer für ihre Aufgabe besonders günstigen Drehzahl angetrieben wird. Die vorliegende Erfindung sieht vor, dass die Drehzahl der Nebenwelle über das Zahnradgetriebe ins Schnelle übersetzt wird. Dadurch wird das von der Nebenwelle übertragene Drehmoment im Verhältnis der Übersetzung verringert, so dass für den Fall, dass die Nebenwelle mit der Getriebebremse zusammenwirkt, die Getriebebremse entsprechend klein und kompakt ausgeführt werden kann. Für den Fall, dass die Nebenwelle einen PTO-Anschluss beispielsweise für den Antrieb einer Hydraulikpumpe aufweist, kann für eine vorgegebene Pumpleistung eine schnell drehende, verhältnismäßig klein bauende Hydraulikpumpe angeschlossen werden.

Damit die Zapfwelle für den Fall, dass eine PTO-Anwendung nicht gefordert wird, nicht ständig mitläuft, ist gemäß einer weiteren Ausgestaltung der Erfindung vorgesehen, dass die Zapfwelle wahlweise an die antriebsseitige Getriebewellenanordnung ankoppelbar bzw. von dieser abkoppelbar ist. Um dennoch über eine Synchronisationsfunktion zu verfügen, ist dann vorgesehen, dass das Schaltgetriebe eine weitere, auf eine ständig mit der Getriebewellenanordnung gekoppelte Getriebewelle wirkende Getriebebremse aufweist, die diese Funktion übernehmen kann.

Gemäß einer konstruktiven Ausgestaltung der erfindungsgemäßen Getriebebremseneinrichtung ist die externe Getriebebremse als Lamellenbremse ausgebildet, mit auf der zugeordneten Welle einerseits und in einem die Getriebebremse aufnehmenden Bremsengehäuse andererseits angeordneten sowie zusammenwirkenden Bremslamellen.

Die Erfindung lässt sich anhand eines Ausführungsbeispiels weiter erläutern. Dazu ist der Beschreibung eine Zeichnung beigefügt. In dieser zeigt:
- Fig. 1: schematisch den Antriebsstrang eines Kraftfahrzeuges mit einer externen Getriebebremseneinrichtung (nicht beansprucht),
- Fig. 2: eine Anordnung etwa gemäß der Fig. 1 mit einer anderen Ausführungsvariante der Getriebebremseneinrichtung und
- Fig. 3: eine Anordnung etwa gemäß den Fig. 1 und 2 mit einer weiteren Anordnungsvariante einer Getriebebremseneinrichtung.

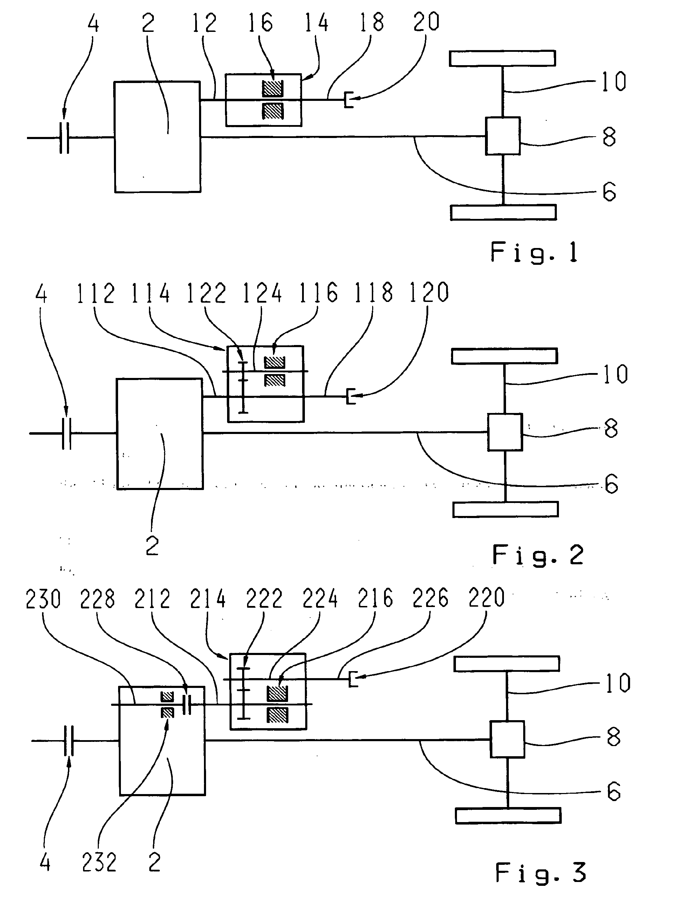

Fig. 1 zeigt demnach einen Antriebsstrang für ein Kraftfahrzeug mit einem mehrstufigen, beispielsweise automatisierten Schaltgetriebe 2, welches über eine Fahrkupplung 4 mit einem nicht dargestellten Antriebsmotor verbindbar ist. Eine Abtriebswelle 6 des Schaltgetriebes 2 bzw. eine damit verbundene Kardanwelle ist über ein Differenzialgetriebe 8 mit einer Antriebsachse 10 des Kraftfahrzeuges verbunden.

Eine mit einer antriebsseitigen Getriebewellenanordnung des Schaltgetriebes 2 antriebsverbundene Zapfwelle 12 ist in ein Bremsengehäuse 14 hineingeführt und in diesem drehbar gelagert. Der Zapfwelle 12 ist eine Getriebebremse 16 zugeordnet, die zum Beispiel als Lamellenbremse ausgebildet ist und über eine Getriebesteuerung ansteuerbar ist.

Wenn beispielsweise beim Hochschalten des Schaltgetriebes 2 bei geöffneter Fahrkupplung 4 die antriebsseitige Getriebewellenanordnung abgebremst und dadurch mit der durch die Fahrgeschwindigkeit des Kraftfahrzeuges vorgegebenen Drehzahl der Abtriebswelle 6 bzw. einer mit dieser antriebsverbundenen Getriebewelle synchronisiert werden soll, dann wird die Getriebebremse 16 betätigt, welche die Zapfwelle 12 und damit die mit dieser antriebsverbundene antriebsseitige Getriebewellenanordnung abbremst.

Wie Fig. 1 erkennen lässt, ist die Zapfwelle 12 durch das Bremsengehäuse 14 hindurchgeleitet, so dass deren getriebefernes Ende 18 aus dem Bremsengehäuse 14 herausragt. An dem getriebefernen Ende 18 der Zapfwelle 12 ist ein PTO-Anschluss 20 angeordnet bzw. ausgebildet, an den ein Nebenaggregat oder ein angehängtes Gerät angekuppelt werden kann, wie nicht näher dargestellt zu werden braucht.

Fig. 2 zeigt eine Antriebsanordnung ähnlich der in Fig. 1, wobei einige Elemente der Fig. 2 jeweils die gleichen Bezugszahlen tragen wie damit gleiche Bauteile der Fig. 1, und nicht nochmals im Einzelnen erläutert sind.

Die Zapfwelle 112 ist wie bei der Antriebsanordnung gemäß Fig. 1 auch in Fig. 2 durch das Bremsengehäuse 114 hindurchgeführt, und das getriebeferne Ende 118 der Zapfwelle 112 ist mit einem PTO-Anschluss 120 ausgestattet. Die Zapfwelle 112 verzweigt sich jedoch über ein Zahnradgetriebe 122 zu einer Nebenwelle 124, die ebenfalls im Bremsengehäuse 114 drehbar gelagert ist. Auf die Nebenwelle 124 wirkt eine Getriebebremse 116 ein, die wie bei der Variante gemäß Fig. 1 die Aufgabe hat, die antriebsseitige Getriebewellenanordnung des Schaltgetriebes 2 beim Hochschalten abzubremsen.

In den Fig. 1 und 2 sind die Zapfwellen 12, 112 jeweils mit der antriebsseitigen Getriebewellenanordnung fest antriebsverbunden, so dass die Zapfwellen 12, 112 stets mit einer der Drehzahl der antriebsseitigen Getriebewellenanordnung entsprechenden Drehzahl mit umlaufen.

Fig. 3 zeigt eine Antriebsanordnung, bei der ebenfalls teilweise die gleichen Bezugszahlen für gleiche Elemente wie in den Fig. 1 und 2 genutzt werden. Wie die Fig. 3 erkennen lässt, ist die Zapfwelle 212 wiederum über ein Zahnradgetriebe 222 zu einer Nebenwelle 224 verzweigt. Im Gegensatz zu der Anordnung gemäß Fig. 2 wirkt bei der Variante gemäß Fig. 3 eine Getriebebremse 216 mit der 2apfwelle 212 zusammen, während die Nebenwelle 224 aus dem Bremsengehäuse 214 herausgeführt und an dem herausgeführten Ende 226 mit einem PTO-Anschluss 220 ausgestattet ist.

Wie die Fig. 3 weiter zeigt, ist die Zapfwelle 212 an ihrem getriebeseitigen Ende über eine Zapfwellenkupplung 228 mit einer mit der antriebsseitigen Getriebewellenanordnung antriebsverbundenen Getriebewelle 230 kuppelbar bzw. von dieser abkuppelbar. Auf diese Weise kann der PTO-Anschluss 220 für den Fall, dass er nicht gebraucht wird, stillgelegt werden. Um dennoch eine Getriebebremse für die Synchronisationsfunktion zu haben, ist der Getriebewelle 230 eine weitere, vorzugsweise kleinere und leistungsschwächere Getriebebremse 232 zugeordnet, die für den Fall einer geöffneten Zapfwellenkupplung 228 die Synchronisationsfunktion des Getriebes 2 übernimmt.

### Bezugszeichen

- 2: Schaltgetriebe
- 4: Fahrkupplung
- 6: Abtriebswelle
- 8: Differenzialgetriebe
- 10: Antriebsachse
- 12: Zapfwelle
- 14: Bremsengehäuse
- 16: Getriebebremse
- 18: getriebefernes Ende der Zapfwelle
- 20: PTO-Anschluss
- 112: Zapfwelle
- 114: Bremsengehäuse
- 116: Getriebebremse
- 118: getriebefernes Ende der Zapfwelle
- 120: PTO-Anschluss
- 122: Zahnradgetriebe
- 124: Nebenwelle
- 212: Zapfwelle
- 214: Bremsengehäuse
- 216: Getriebebremse
- 220: PTO-Anschluss
- 222: Zahnradgetriebe
- 224: Nebenwelle
- 226: getriebefernes Ende der Zapfwelle
- 228: Zapfwellenkupplung
- 230: Getriebewelle
- 232: Getriebebremse

## Patentansprüche

1. Getriebebremseneinrichtung für ein mehrstufiges Schaltgetriebe (2) im Antriebsstrang eines Kraftfahrzeuges, umfassend eine außerhalb eines Getriebegehäuses angeordnete, auf eine aus dem Getriebegehäuse herausgeführte, mit einer antriebsseitigen Getriebewellenanordnung antriebsverbundene bzw. antriebsverbindbare Zapfwelle (112, 212) wirkende Getriebebremse, wobei die Getriebebremse dazu geeignet ist, beim Hochschalten des Schaltgetriebes bei geöffneter Fahrkupplung die antriebsseitige Getriebewellenanordnung abzubremsen und dadurch mit der durch die Fahrgeschwindigkeit des Kraftfahrzeuges vorgegebenen Drehzahl der Abtriebswelle bzw. einer mit dieser antriebsverbundenen Getriebewelle zu synchronisieren, wobei der Getriebebremse (116, 216) wenigstens ein mit der Zapfwelle (112, 212) antriebsverbundener PTO-Anschluss (120, 220) nachgeordnet ist, **dadurch gekennzeichnet, dass** die Zapfwelle (112, 212) sich in wenigstens zwei Einzelwellen verzweigt, wobei eine dieser Einzelwellen mit der Getriebebremse (116, 216) zusammenwirkt und die anderen Einzelwellen jeweils einen PTO-Anschluss (120, 220) aufweisen, und dass die Zapfwelle (112, 212) über ein Zahnradgetriebe (122, 222) eine Nebenwelle (124, 224) antreibt, wobei die Zapfwelle (112, 212) und die Nebenwelle (124, 224) jeweils eine der Einzelwellen bilden.

2. Getriebebremseneinrichtung nach Anspruch 1, **dadurch gekennzeichnet, dass** die Zapfwelle (112) an ihrem getriebefemen Ende (118) einen PTO-Anschluss (120) aufweist und die Nebenwelle (124) mit der Getriebebremse (116) zusammenwirkt.

3. Getriebebremseneinrichtung nach Anspruch 1, **dadurch gekennzeichnet, dass** die Zapfwelle (212) mit der Getriebebremse (216) zusammenwirkt und die Nebenwelle (224) an einem Ende einen PTO-Anschluss (220) aufweist.

4. Getriebebremseneinrichtung nach Anspruch 2 oder 3, **dadurch gekennzeichnet, dass** die Drehzahl der Nebenwelle (124, 224) über das Zahnradgetriebe (122, 222) ins Schnelle übersetzt wird.

5. Getriebebremseneinrichtung nach zumindest einem der Ansprüche 1 bis 4, **dadurch gekennzeichnet, dass** die Zapfwelle (212) wahlweise an die antriebsseitige Getriebewellenanordnung (Getriebewelle 230) ankoppelbar bzw. von dieser abkoppelbar ist, wobei das Schaltgetriebe (2) eine weitere, auf eine ständig mit der Getriebewellenanordnung gekoppelte Getriebewelle wirkende Getriebebremse (232) aufweist.

6. Getriebebremseneinrichtung nach zumindest einem der Ansprüche 1 bis 5, **dadurch gekennzeichnet, dass** die externe Getriebebremse (116, 216) als Lamellenbremse mit auf der zugeordneten Welle (124, 212) einerseits und in einem die Getriebebremse aufnehmenden Bremsengehäuse (114, 214) andererseits angeordneten und zusammenwirkenden Bremslamellen ausgebildet ist.

## Claims

1. Transmission brake device for a multi-stage shift transmission (2) in the drivetrain of a motor vehicle, comprising a transmission brake which is arranged outside a transmission housing and which acts on a power take-off shaft (112, 212) which is guided out of the transmission housing and is or can be drive-connected to a drive-input-side transmission shaft arrangement, with the transmission brake being suitable for braking the drive-input-side transmission shaft arrangement, and thereby synchronizing the latter with the rotational speed, predefined by the speed at which the motor vehicle is travelling, of the drive output shaft or of a transmission shaft drive-connected to said drive output shaft, during an upshift of the shift transmission when the driving clutch is open, with at least one PTO connection (120, 220) which is drive-connected to the power take-off shaft (112, 212) being connected downstream of the transmission brake (116, 216), **characterized in that** the power take-off shaft (112, 212) branches into at least two individual shafts, with one of said individual shafts interacting with the transmission brake (116, 216) and with the other individual shafts having in each case a PTO connection (120, 220), and **in that** the power take-off shaft (112, 212) drives an auxiliary shaft (124, 224) via a gearwheel mechanism (122, 222), with the power take-off shaft (112, 212) and the auxiliary shaft (124, 224) forming in each case one of the individual shafts.

2. Transmission brake device according to Claim 1, **characterized in that** the power take-off shaft (112) has, at its end (118) remote from the transmission, a PTO connection (120), and the auxiliary shaft (124) interacts with the transmission brake (116).

3. Transmission brake device according to Claim 1, **characterized in that** the power take-off shaft (212) interacts with the transmission brake (216) and the secondary shaft (224) has, at one end, a PTO connection (220).

4. Transmission brake device according to Claim 2 or 3, **characterized in that** the rotational speed of the auxiliary shaft (124, 224) is stepped up by means of the gearwheel mechanism (122, 222).

5. Transmission brake device according to at least one of Claims 1 to 4, **characterized in that** the power take-off shaft (212) can be selectively coupled to and decoupled from the drive-input-side transmission shaft arrangement (transmission shaft 230), with the shift transmission (2) having a further transmission brake (232) which acts on a transmission shaft which is permanently coupled to the transmission shaft arrangement.

6. Transmission brake device according to at least one of Claims 1 to 5, **characterized in that** the external transmission brake (116, 216) is designed as a multiplate brake with interacting brake plates arranged firstly on the associated shaft (124, 212) and secondly in a brake housing (114, 214) which holds the transmission brake.

## Revendications

1. Dispositif de freinage d'engrenage pour une boîte de vitesses à plusieurs étages (2), dans la chaîne cinématique d'un véhicule automobile, comprenant un frein d'engrenage disposé en dehors d'un boîtier d'engrenages, agissant sur un arbre de prise de force (112, 212) guidé hors du boîtier d'engrenages, connecté par entraînement ou pouvant être connecté par entraînement à un agencement d'arbre de boîte de vitesses du côté de l'entraînement, le frein d'engrenage étant prévu pour freiner l'agencement d'arbre de boîte de vitesses du côté de l'entraînement lors d'un passage à une vitesse supérieure de la boîte de vitesses lorsque l'embrayage de conduite est ouvert, et pour ainsi le synchroniser avec le régime de l'arbre de sortie ou d'un arbre de boîte de vitesses connecté à celui-ci par entraînement, prédéfini par la vitesse de conduite du véhicule automobile, le frein d'engrenage (116, 216) étant suivi d'au moins un raccord de prise de force (120, 220) connecté par entraînement à l'arbre de prise de force (112, 212), **caractérisé en ce que** l'arbre de prise de force (112, 212) se ramifie en au moins deux arbres individuels, l'un de ces arbres individuels coopérant avec le frein d'engrenage (116, 216) et les autres arbres individuels présentant à chaque fois un raccord de prise de force (120, 220), et **en ce que** l'arbre de prise de force (112, 212) entraîne, par le biais d'un engrenage à roue dentée (122, 222), un arbre auxiliaire (124, 224), l'arbre de prise de force (112, 212) et l'arbre auxiliaire (124, 224) formant à chaque fois l'un des arbres individuels.

2. Dispositif de freinage d'engrenage selon la revendication 1, **caractérisé en ce que** l'arbre de prise de force (112) présente à son extrémité éloignée de l'engrenage (118) un raccord de prise de force (120) et l'arbre auxiliaire (124) coopère avec le frein d'engrenage (116).

3. Dispositif de freinage d'engrenage selon la revendication 1, **caractérisé en ce que** l'arbre de prise de force (212) coopère avec le frein d'engrenage (216) et l'arbre auxiliaire (224) présente à une extrémité un raccord de prise de force (220).

4. Dispositif de freinage d'engrenage selon la revendication 2 ou 3, **caractérisé en ce que** le régime de l'arbre auxiliaire (124, 224) est accéléré par le biais de l'engrenage à roue dentée (122, 222).

5. Dispositif de freinage d'engrenage selon au moins l'une quelconque des revendications 1 à 4, **caractérisé en ce que** l'arbre de prise de force (212) peut être accouplé de manière sélective à l'agencement d'arbre de boîte de vitesses du côté de l'entraînement (arbre de boîte de vitesses 230) ou être désaccouplé de celui-ci, la boîte de vitesses (2) présentant un autre frein d'engrenage (232) agissant sur un arbre de boîte de vitesses accouplé en permanence à l'agencement d'arbre de boîte de vitesses.

6. Dispositif de freinage d'engrenage selon au moins l'une quelconque des revendications 1 à 5, **caractérisé en ce que** le frein d'engrenage externe (116, 216) est réalisé d'une part sous forme de frein à disques avec des disques de frein coopérants et disposés d'une part sur l'arbre associé (124, 212) et d'autre part dans un boîtier de frein (114, 214) recevant le frein d'engrenage.
